# EUROPEAN PATENT APPLICATION

(11) **EP 1 065 402 A1**
(43) Date of publication of application: **03.01.2001**
(21) Application number: 00305497.0
(22) Date of filing: 29.06.2000
(51) Int. Cl.: F16D 59/00

(54) **Electro magnetically releasable brake**

(30) Priority: 02.07.1999 GB 9915590
(71) Applicant: Matrix International Limited, Angus, Scotland DD9 7EP (GB)
(72) Inventor: Henderson, Graeme, Angus, Scotland DD9 6YJ (GB)
(74) Representative: Gill, David Alan

(57) **Abstract**

The invention provides for an electro magnetically releasable brake (28) comprising a brake body (30) providing part of an electro magnetic arrangement, the brake body having at least one brake member (40), a brake engagement member (34) presenting a surface to be contacted by a surface of the brake member (40) to achieve a required braking effect, one of the brake body (30) and the brake engagement member (34) being mounted for rotation relative to the other about an axis of rotation (36), the brake member (40) being mounted movably with respect to the brake body (30) and for movement towards and into engagement with said surface of the brake engagement member (34) under influence of a biassing force, and for movement out of contact and away from the said surface of the brake engagement member (34) under influence of an electro magnetic force generated by the said electro magnetic arrangement and which force is arranged to overcome the aforesaid biassing force, wherein said movement of the brake member (40) relative to the brake body (30) is in a radial direction relative to the said axis of rotation (36).

## Description

The present invention relates to an electro magnetically releasable brake.

Electro magnetically releasable brakes are well known and generally comprise electro magnetic coils for generating an electro magnetic force which is arranged to act on an armature brake pad member so as to retain the brake pad, when the coil is energized, out of contact with the brake friction plate. Compression springs are also provided which seek to urge the brake pad into engagement with the friction plate such that when the coil is not energized, there is no electro magnetic force present to act against the biassing force of the compression springs such that a braking effect is achieved. Thus, it is only upon activation of the electro magnetic coil that the brake is effectively released since the electro magnetic force developed by the coil can overcome the biassing of the compression springs seeking to urge the brake pad into engagement with the friction plate.

In the conventional design of electrically releasable brakes, an annular friction plate is connected to a rotatable hub by means of a spline and the armature brake pad element is urged, either by means of the compression springs, or by the over-riding electro magnetic force developed by the coil, in a direction parallel to the axis of rotation of the hub. With this known design, there is necessarily a clearance between the multi recessed splined form provided in the centre of the friction plate for the mounting of the friction plate onto the splined hub. Such clearance allows for the necessary movement between the splined friction plate and the splined hub and as required during operation of the brake. However, where precision of operation is an important requirement, such permitted relative movement between the friction plate and the splined hub can be particularly disadvantageous and lead to problems of, for example, torsional instability.

Such instability commonly manifests itself in the form of backlash within the brake arrangement. One known arrangement seeking to prevent such backlash generally involves replacement of the splined connection between the friction plate and the hub by means of a flexible diaphragm securely attached between the friction plate and hub. However, such an arrangement can also prove problematic in that it requires precise location of the brake in an axial direction so as not to overload the diaphragm.

The present invention seeks to provide for an electro magnetically releasable brake which exhibits advantages over known such brake arrangements.

In accordance with the present invention there is provided an electro magnetically releasable brake comprising a brake body providing part of an electro magnetic arrangement, the brake body having at least one brake member, a brake engagement member presenting a surface to be contacted by a surface of the brake member to achieve a required braking effect, one of the brake body and the brake engagement member being mounted for rotation relative to the other about an axis of rotation, the brake member being mounted movably with respect to the brake body and for movement towards and into engagement with said surface of the brake engagement member under influence of a biassing force, and for movement out of contact and away from the said surface of the brake engagement member under influence of an electro magnetic force generated by the said electro magnetic arrangement and which force is arranged to overcome the aforesaid biassing force, wherein said brake member and brake body are arranged such that movement of the brake member relative to the brake body is in a radial direction relative to the said axis of rotation.

In view of the manner of operation of such an arrangement, i.e. the application, and release, of a braking force in a radial direction, changes in the axial clearance between the brake member and the brake engagement member can be readily accommodated without problems arising when the brake is released and expansion of the components occurs.

Irrespective of consideration of zero backlash, the invention can advantageously provide for a brake arrangement exhibiting a vertical brake axis which, through activation of the electromagnetic arrangement, works against the force of gravity which seeks to bring the braking elements into contact. A relatively rigid connection, such as that provided by a hinge pin, can be provided between the brake shoe member and brake body.

Further, at the time of assembly of the brake to a machine installation, if the electro magnetic force is applied so as to release the brake, the alignment of various operative elements of the brake need only be performed relatively approximately.

Advantageously, the brake body can include a plurality of brake members and the biassing force applied to each of the said plurality of the brake members can be arranged to be different. In this manner, a graduated force application or release can be achieved.

Preferably, the brake comprises a drum brake arrangement.

The said biassing force can be delivered by means of a resilient member which may be in the form of a spring means.

Alternatively, or in addition, the biassing force can be delivered by magnetic means such as a permanent magnet. Further advantages can arise through switching the polarity of the supply by which the electromagnet is energised. For example, rather than restraining activation of the brake, reversal of polarity can cause the electromagnet to work in tandem with the biassing means in providing the braking force required. A wide range of such forces can then be achieved.

Advantageously, the electro magnetic arrangement comprises a coil serving to provide a magnetic flux path through part of the brake body and into the brake member.

Further, the interactive pole faces of the electro magnetic arrangement advantageously comprise radially facing surfaces of the brake body.

Preferably, the brake member is mounted to a brake body by means of a resilient coupling member such as a spring strap member for transmitting torque generated by the braking action of the brake member to the brake body.

The invention is described further hereinafter, by way of example only, with reference to the accompanying drawings in which:
Figs. 1A and 1B show a longitudinal cross-section and end view of a known design of an electro magnetically releasable brake;
Figs. 2A and 2B show a longitudinal sectional view and a part cut-away end view of an electro magnetically releasable brake arrangement embodying the present invention;
Fig. 3 is a cut-away part side-view of an electromagnetically releasable brake according to another embodiment of the present invention;
Fig. 4 is a part longitudinal section through yet another embodiment of the present invention;
Fig. 5 is a partially exploded perspective view of the embodiment of Figs. 2A and 2B of the present invention; and
Fig.6 is a partially exploded perspective view of the embodiment of Figs. 2A and 2B of the present invention.

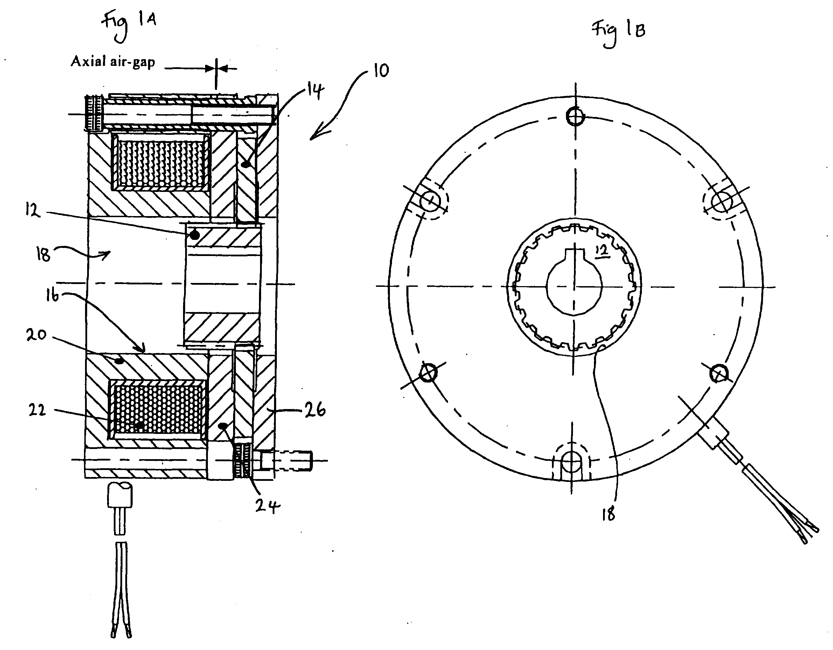

Turning first to Fig. 1A, there is illustrated a known electro magnetically releasable brake 10 which is operatively provided to arrest the rotational motion of a hub 12. The outer cylindrical surface of the hub 12 presents a splined formation upon which is mounted an annular friction plate 14. The brake also comprises an annular brake body 16 having a central aperture 18 through which the hub 12 extends. The annular brake body 16 includes an electro magnetic arrangement comprising a magnet body 20 and an electro magnetic coil 22. This electro magnetic arrangement acts on an annular armature plate 24 and, when the coil 22 is energized, serves to withdraw the annular armature plate 24 away from contact with the splined friction plate 14. Compression springs (not shown) are provided within the annular brake body 16 and serve to urge the annular armature plate 24 in a direction away from the electro magnetic coil 22 and towards, and into frictional engagement with, the splined friction plate: the frictional contact therebetween serving to arrest motion of the splined friction plate 14 and thus the central rotatable hub 12. During such operation of the brake, the splined friction plate 14 is then effectively sandwiched between the annular armature plate 24 and an annular end plate 26 of the brake arrangement.

From the above description of the operation of such a known electro magnetically releasable brake, it will be appreciated that a degree of clearance is provided between the co-operating splined forms of the outer cylindrical surface of the hub 12 and the inner cylindrical surface of the splined friction plate 14 so as to allow for a slight degree of movement in an axial direction of the splined friction plate during application, and release, of a braking force by way of the annular armature plate 24.

As mentioned in the introduction to the present application, such, albeit minor, and relative movement allowed for between the hub 12 and splined friction plate 14 can prove particularly disadvantageous insofar as it can lead to backlash within the brake arrangement.

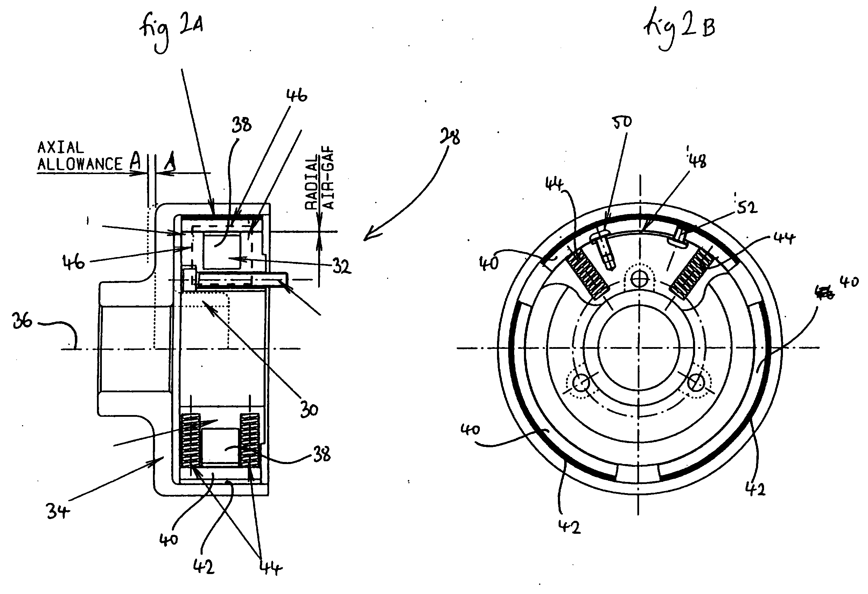

Turning now to Fig. 2A, there is illustrated a longitudinal section through an electro magnetically releasable brake in accordance with one embodiment of the present invention.

The arrangement illustrated here is in the form of a drum brake 28 having a stationary cylindrical brake body 30 in the radially outer regions of which is provided an electro magnetic arrangement 32. The brake body 30 is formed coaxial with a rotatable drum 34 which is mounted to, or formed integral with, a rotatable shaft arranged to rotate about an axis of rotation 36.

The electro magnetic arrangement 32 includes an electro magnetic coil 38, the radially outer regions of the cylindrical brake body 30 and also a movably mounted brake shoe 40 having a frictional lining 42 provided thereon on its radially outer surface.

Also associated with each of the brake shoes 40 is a plurality of compression springs 44 located in blind bores within the radially outer portions of the brake body 30.

When energized, the coil 38 serves to generate a magnetic flux path 46 that extends out of the radially outer faces of the brake body 30 and into the brake shoe 40. Such energization of the coil 38 therefore serves to retract the brake shoes 40 in a radially inward direction away from the inner cylindrical surface of the brake drum 34.

When unenergized, the coil 38 does not provide for any such electro magnetic force such that the only force acting upon the brake shoe 40 are the biassing forces delivered by the compression springs 44 which serve to urge the brake shoe 40, and in particular friction lining 42, into frictional engagement with the inner cylindrical surface of the brake drum 34 so as to achieve a braking effect on the brake drum 34 which, as mentioned above, is arranged to rotate about the axis of rotation 36.

Thus, as with the prior art version of Fig. 1A, the braking effect is only released upon energizing the coil 38 so as to generate an electro magnetic force which is arranged to be strong enough to overcome the biassing force exerted by the compression springs 44 and therefore release the brake.

However, but importantly, unlike the known electro magnetically releasable brake arrangements, it will be appreciated that the movement of the brake shoe 40 that is required to achieve activation and release of the brake occurs in a radial direction and therefore the axial allowance indicated by arrows A in Fig. 2A is of no consequence to the application, and release, of the brake through movement of the brake shoes 40 under the influence of the electro magnetic force generated by the coil 38 by means of the compression springs 44.

The specific embodiment of the present application is illustrated further by way of Fig. 2B in which three separate brake shoes 44, each having respective frictional linings 42 are illustrated.

A comparison between Figs. 2A and 2B also illustrates that a total of four compression springs 44 are arranged to act on each brake shoe 40. Further, and importantly, engagement between each brake shoe 40 and the cylindrical brake body 30 can be achieved by means of a spring strap 48 secured at one end to a screw member 50 received within the cylindrical brake body 30 and at an opposite end by a screw member 52 received in the brake shoe 40. The forces applied to each of the brake shoes during application of the brakes is therefore transmitted to the stationary cylindrical brake body 30 by means of such flexible spring straps 48.

As mentioned previously, a particular feature of the present invention is that the active pole faces of the electro magnetic arrangement 32 are formed by the radially outward facing surfaces of the cylindrical brake body 30 and this serves to retract the brake shoes 40 from contacting the brake drum 34 when the coil 38 is energized. As a further important feature, and as mentioned above, the torque generated by a force acting on the brake shoes 40 during application of the brakes is transmitted to the stationary cylindrical brake body 30 by means of a resilient coupling member such as a flexible spring strap member 48 which is secured by means of the two screws 50, 52 to the cylindrical brake body 30 and the brake shoe 40 respectively.

The provision of such a secure connection by means of the spring strap 48 is also advantageously achieved without rotational free play arising and so advantageously provides for a backlash-free arrangement.

The provision of such a spring strap member 48 between the brake shoes 40 and the stationary cylindrical brake body 30 also advantageously allows for the torque to be transmitted bidirectionally.

It can therefore be appreciated particularly when comparing the embodiment of Fig. 2A of the present invention with known electro magnetically releasable brakes such as that disclosed with reference to Fig. 1A of the present application that a braking arrangement can be provided in which the features leading to disadvantageous torsional instability and backlash within known brake arrangements are eliminated, thus eliminating the aforementioned problems.

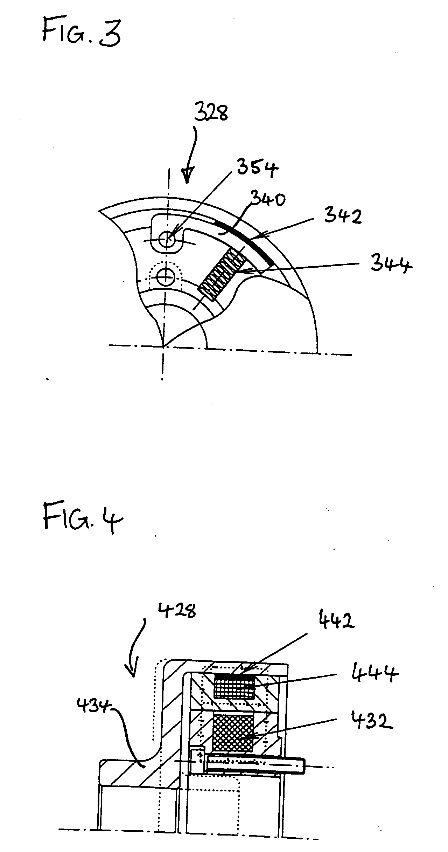

Turning now to Fig. 3, there is shown a cut-away part side view of another embodiment of the present invention comprising a drum brake 328 in which a brake shoe 340 having a frictional lining 342 is pivotally connected by pivot 354 to the body of the drum brake 328. The brake shoe 340 is urged by means of a compression spring 344 in the direction of the outer drum of the brake such that the friction lining 342 is biassed into contact with the inner surface of the brake drum so as to provide for a braking effect when required.

In the embodiment illustrated with reference to Fig. 3 the pivot 354 functions as a hinged pin and provides for a particularly cost effective arrangement whereby an electromagnetically releasable drum brake arrangement can be provided in which the electromagnetic arrangement serves to retain the brake shoes out of contact with the brake drum and so works against the biassing effect of the compression spring 344 and gravity. Such a simple arrangement can advantageously be employed in embodiments in which the achievement of zero backlash is not a primary concern.

Turning now to Fig. 4, a yet further embodiment is illustrated in which a drum brake arrangement 428 having a drum 434 is again provided with an electromagnetic arrangement 432 which can be activated so as to retain the frictional lining 442 of a brake shoe out of engagement with an inner surface of the brake drum 434. However, the embodiment illustrated in Fig. 4 differs from previous embodiments in that the means for biassing the frictional lining 442 of the brake shoe into engagement with the inner surface of the brake drum 434 comprises a permanent magnet member 444. The effect upon a magnet is such that, without the electromagnetic arrangement 432 being energized, the brake shoe is urged such that the frictional lining 442 engages the inner surface of the brake drum 434. Upon energisation of the electromagnetic arrangement 432, the brake shoe is retracted against the biassing force provided by the permanent magnet 444 out of engagement with the inner surface of the drum brake 434. A further feature can advantageously be provided here in that, through a reversal in polarity of the electrical supply to the electromagnetic arrangement 432, the electromagnetic arrangement 432 can work in tandem with the permanent magnet 444 to provide a yet further enhanced braking effect. In this manner, the electromagnetic arrangement 432 can advantageously be selectively switched so as to either prevent a, or provide an increased, braking effect. Such selective operation can likewise be achieved in association with the other illustrated embodiments of the present invention.

Also, the invention is particularly advantageous in that the brake arrangement can be assembled into, for example, an electric motor and wherein it therefore becomes an integral part of the motor through use of the rotor as the brake drum.

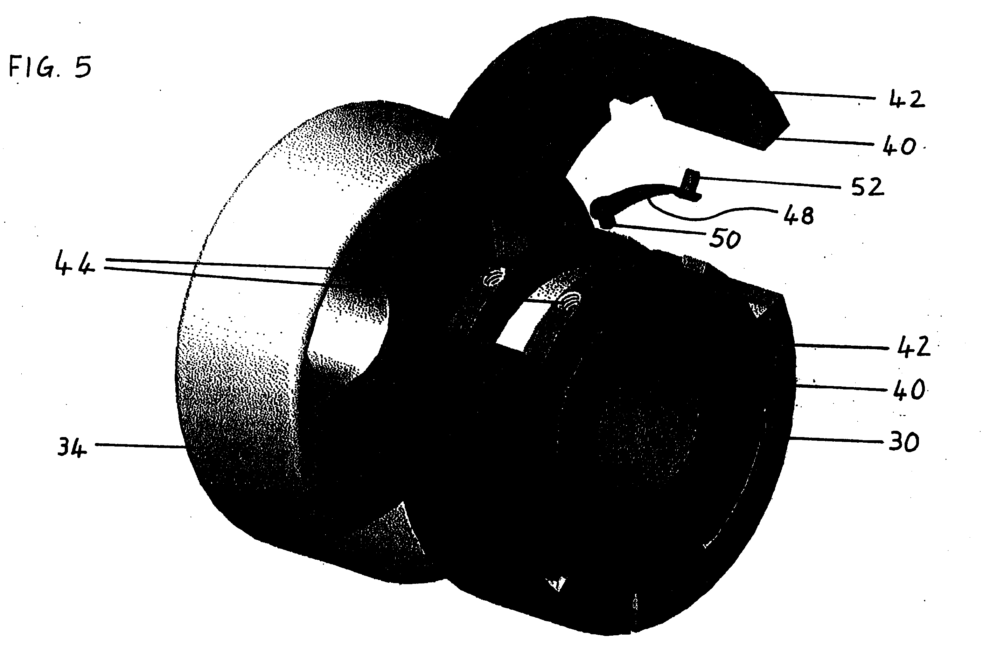

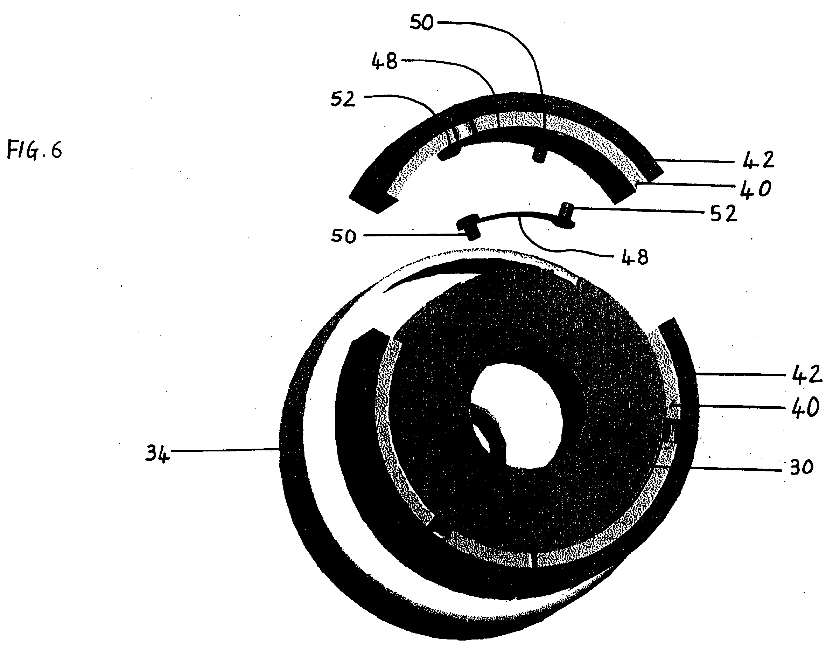

Figs. 5 and 6 share like reference numbers with Figs. 2A and 2B. The partially exploded perspective views shown in Figs. 5 and 6 illustrate more clearly a means of attachment of the flexible strap member 48 to the cylindrical brake body 30 and the brake shoe 40. In these particular embodiments a screw 50 is used to attach one end of the flexible strap member 48 to the cylindrical body 30 and another screw 52 is used to attach the opposite end of the flexible strap member 48 to the brake shoe 40.

It should of course be appreciated that the invention is not restricted to the details of the foregoing embodiment.

For example, any appropriate number of brake shoes can be provided within a brake arrangement and, if a plurality of brake shoes is provided, the spring force acting upon each of the plurality of shoes can be selectively different. In such an arrangement, the voltage supplied to the electro magnetic coil will accordingly have a different effect on the release of each of the brake shoes such that these shoes can be released, and effectively re-engaged, in a series or stepped manner. The engagement and disengagement characteristics of the brake can therefore advantageously be tailored to the particular working requirements of the brake and the degree of torque variability can likewise be achieved.

Further, the springs illustrated within Figs. 2A and 2B can be replaced by straps in the form of cantilever springs or any other appropriate resilient means, such as elastomer springs can be employed.

The actual design, dimensions and shape of the drum brake can of course also vary as required by general working characteristics of the brake arrangement.

## Claims

1. An electro magnetically releasable brake comprising a brake body providing part of an electro magnetic arrangement, the brake body having at least one brake member, a brake engagement member presenting a surface to be contacted by a surface of the brake member to achieve a required braking effect, one of the brake body and the brake engagement member being mounted for rotation relative to the other about an axis of rotation, the brake member being mounted movably with respect to the brake body and for movement towards and into engagement with said surface of the brake engagement member under influence of a biassing force, and for movement out of contact and away from the said surface of the brake engagement member under influence of an electro magnetic force generated by the said electro magnetic arrangement and which force is arranged to overcome the aforesaid biassing force, wherein said brake member and brake body are arranged such that movement of the brake member relative to the brake body is in a radial direction relative to the said axis of rotation.

2. A brake as claimed in Claim 1, wherein the brake body includes a plurality of brake members.

3. A brake as claimed in Claim 2, wherein the biassing force applied to each of the said plurality of the brake members is different.

4. A brake as claimed in Claim 1, 2 or 3, wherein the brake body is arranged to be stationary and the brake engagement member is mounted to a rotatable shaft.

5. A brake as claimed in Claim 1, 2 or 3, wherein the brake engagement member is arranged to be stationary and the brake body is arranged to be mounted to a rotatable shaft.

6. A brake as claimed in any one of Claims 1-5, and comprising a drum brake arrangement.

7. A brake as claimed in Claim 6, wherein the brake engagement member comprises the brake drum and the said brake member comprises a brake shoe.

8. A brake as claimed in any one of the preceding claims, wherein the braking force is provided by means of a magnet means.

9. A brake as claimed in Claim 8, wherein the magnet means comprises a permanent magnet.

10. A brake as claimed in any one of the preceding claims wherein the electromagnetic arrangement can selectively provide forces in one of two opposite directions to either prevent, or enhance, the braking effect.

11. A brake as claimed in any one of claims 1 to 7, wherein the said biassing force is delivered by means of a resilient member.

12. A brake as claimed in Claim 11, wherein the resilient member comprises a spring means.

13. A brake as claimed in any one of the preceding claims, wherein the electro magnetic arrangement comprises a coil serving to provide a magnetic flux path through part of the brake body and into the brake member.

14. A brake as claimed in Claim 13, wherein interactive pole faces of the electro magnetic arrangement comprise radially facing surfaces of the brake body.

15. A brake as claimed in any one of the preceding claims, wherein the brake member is mounted to a brake body by means of a resilient coupling member for transmitting torque generated by the braking action of the brake member to the brake body.

16. A brake as claimed in Claim 15 wherein the resilient coupling member comprises a spring strap member.

17. A brake as claimed in Claim 16, wherein the spring strap member is secured to the brake member at the brake body by respective securing means.

18. A brake as claimed in any one of Claims 1 to 17, wherein the brake member is mounted to a brake body by means of a pivot member.

19. An electro magnetically releasable brake substantially as hereinbefore described with reference to, and as illustrated in, Figs. 2A and 2B of the accompanying drawings.
